# EUROPÄISCHE PATENTSCHRIFT

(11) **EP 4 729 268 B1**
(45) Veröffentlichungstag und Bekanntmachung des Hinweises auf die Patenterteilung: **02.12.2026**
(21) Anmeldenummer: 24206952.4
(22) Anmeldetag: 16.10.2024
(51) Int. Cl.: B29C 45/14

(54) **HERSTELLUNGSVERFAHREN FÜR EINEN WC-SITZ**
MANUFACTURING METHOD FOR A TOILET SEAT
PROCÉDÉ DE FABRICATION D'UN SIÈGE DE WC

(43) Veröffentlichungstag der Anmeldung: 22.04.2026
(73) Patentinhaber: Geberit International AG, 8645 Jona (CH)
(72) Erfinder: GMÜR, David, 8645 Jona (CH); KARL, Matthias, 8645 Jona (CH)
(74) Vertreter: Szynka Smorodin Patentanwälte Partnerschaft mbB

(56) Entgegenhaltungen:
- CN-A- 103 906 613
- GB-A- 2 482 500

## Beschreibung

Die vorliegende Erfindung bezieht sich auf die Herstellung eines WC-Sitzes und daneben auch auf die Herstellung einer zusätzlich einen WC-Deckel aufweisenden WC-Sitzgarnitur sowie auf die Herstellung eines damit ausgestatteten WCs.

Wasserklosetts (WCs) weisen regelmäßig einen WC-Körper mit einer Schüssel und Einrichtungen für deren Wasserspülung sowie einen an diesem WC-Körper montierten WC-Sitz auf. Typischerweise ist der WC-Sitz an einem Ende gelenkig und insoweit klappbar an dem WC-Körper montiert und typischerweise ist zusätzlich auch noch ein WC-Deckel vorgesehen. Der WC-Sitz dient dem Benutzer zum Sitzen über der Schüssel während der Benutzung und weist dementsprechend über der Schüssel eine Öffnung auf (wobei er nicht zwingend um diese herum geschlossen sein muss), wohingegen der WC-Deckel die Schüssel nach oben abdecken soll und insoweit typischerweise über dem WC-Sitz und typischerweise seinerseits ebenfalls klappbar vorgesehen ist. Zur Montage an einem WC-Körper vorgesehene Sets aus aneinander befestigtem WC-Deckel und WC-Sitz werden auch als WC-Garnitur bezeichnet.

In den letzten Jahren gibt es zunehmend WCs mit weiteren technischen Funktionen, z. B. zur Unterleibsreinigung nach der Benutzung oder Geruchsabsaugung und daneben auch Heizungen für den WC-Sitz. Diese funktionieren durch elektrische Widerstandsheizung oder, seltener, durch die Erwärmung einer Heizschicht in dem WC-Sitz mittels Induktion. In beiden Fällen ist in dem WC-Sitz eine Sitzheizung integriert, also der elektrische Heizwiderstand oder die induktiv erwärmbare Schicht, wobei natürlich außerhalb des WC-Sitzes weitere Funktionselemente zur Versorgung, Steuerung, insbesondere Regelung, oder als Induktionsquellen vorgesehen sein können.

Damit stellt sich in der Praxis insbesondere die Frage der Integration der Sitzheizung in dem WC-Sitz, also insbesondere des angesprochenen Heizwiderstands oder einer induktiv erwärmbaren Schicht, während der Sitzherstellung. Wenn in der üblichen Form der WC-Sitz aus mehreren Schalenteilen, bspw. einer unteren und einer oberen Halbschale, sowie einer Füllung dazwischen zusammengesetzt wird, kann die Sitzheizung zwischen diese Schalenteile gelegt werden.

Die GB 2 482 500 A zeigt die Herstellung eines WC-Sitzes durch Einbringen eines Heizdrahts in eine Form, in der dieser mit einem fließfähigen Material nach dessen Verfestigung einen Verbund bildet. Ferner wird verwiesen auf die CN 103906613 A. Der vorliegenden Erfindung liegt das Problem zugrunde, ein im Hinblick auf einen heizbaren WC-Sitz vorteilhaftes Herstellungsverfahren anzugeben.

Das Problem wird erfindungsgemäß durch ein Herstellungsverfahren nach Anspruch 1 gelöst. Die Erfindung bezieht sich daneben aber auch auf eine entsprechende Herstellung einer WC-Sitzgarnitur nach Anspruch 13 0 und eines WCs nach Anspruch 141.

Gemäß Anspruch 1 ist zunächst die Herstellung der Sitzheizung in einer flächigen Formgebung vorgesehen. Der Begriff der Flächigkeit bedeutet dabei, dass die Sitzheizung in einer Richtung relativ dünn ist, also z. B. dünner als 3 mm, vorzugsweise dünner als 2 mm, 1mm oder auch dünner als 0,8 mm.

Außerdem soll die Sitzheizung in einer gewölbten Formgebung hergestellt werden, also in der gerade erwähnten Flächigkeit nicht einfach planar sein. In anderen Worten ist die Sitzheizung ein dreidimensionales Gesamtgebilde mit Abmessungen in jeder Raumrichtung größer als die gerade erwähnte Materialdickee; dies im Unterschied zu einer planaren flächigen Sitzheizung, bei der die Dicke aufgrund der Planarität auch die Ausdehnung der Sitzheizung insgesamt in der entsprechenden Raumrichtung bedeutet.

Insbesondere kann die Sitzheizung vorzugsweise einen mindestens doppelten Wölbungssinn haben, also von einer Seite aus betrachtet konkav und konvex gewölbt sein. Sie kann in dieser Form an ihre gewünschte oberflächennahe Lage in dem WC-Sitz und dessen ergonomische Form angepasst werden. Strukturen zur Kontaktierung können ein anderer oder weiterer Grund sein.

Die obigen Ausführungen bedeuten nicht zwingend, dass die Sitzheizung in dem gewölbten Zustand zwingend völlig formstabil sein muss; vielmehr wird sie eine gewisse Verformbarkeit und Elastizität aufweisen. Die getroffenen Aussagen zur gewölbten Formgebung beziehen sich vielmehr auf einen kräftefreien Zustand, in dem die Sitzheizung z. B. flach auf eine Platte gelegt wird und dabei die erwähnte gewölbte Gestalt weitgehend beibehält.

Die gewölbt geformte Sitzheizung wird dann in eine zur Herstellung zumindest eines Teils des WC-Sitzes vorgesehene ("erste") Form eingebracht, bevor diese mit dem für die Herstellung des WC-Sitzes herangezogenen Material gefüllt wird. Dieses Material verfestigt sich in der Form, nachdem es in fließfähigem Zustand auf mindestens einer Seite der Sitzheizung eingebracht wurde. In der Form kommt es zu einem Kontakt zwischen dem anfangs noch fließfähigen Material und der Sitzheizung, sodass ein Verbund mit einer guten Haftung dazwischen gebildet werden kann. Insbesondere ist vorzugsweise vorgesehen, dass das fließfähige Material die Sitzheizung großflächig, z. B. im Wesentlichen auf der gesamten Seite (von insgesamt zwei Seiten der Sitzheizung) benetzt. Das gilt insbesondere dann, wenn die Sitzheizung eine flächige Form hat.

Natürlich können weitere Verfahrensschritte folgen, was aber nicht unbedingt notwendig ist. Darauf wird später noch näher eingegangen.

Die vorgeformte Sitzheizung mit ihrer gewölbten Formgebung hat bei dem Einbringen in die erste Form vorzugsweise bereits ihre im fertigen WC-Sitz gewünschte Formgebung oder eine dieser nahe kommende. Es ist aber nicht ausgeschlossen, dass die Sitzheizung durch das in die erste Form eingebrachte fließfähige Material infolge eines Drucks, etwa beim Spritzgießen verformt und dabei insbesondere ein Stück weit oder ganz in Richtung Werkzeugwand gedrückt wird. Dabei kann die Sitzheizung noch näher an die zukünftige obere Oberfläche des WC-Sitzes gebracht werden. Wenn in diesem Zusammenhang Wärme angewendet wird, z. B. beim Spritzgießen, kann dies natürlich die Verformung der Sitzheizung erleichtern.

Eine vollständige oder weitgehende Annäherung der Formgebung der Sitzheizung an die gewünschte Formgebung kann das Positionieren und/oder Fixieren der Sitzheizung in der ersten Form erleichtern. Z. B. kann sie mindestens in qualitativ der gleichen Weise gewölbt sein wie die der späteren Sitzoberfläche entsprechende Innenwand der Form und insoweit quasi von allein gut darin "sitzen".

Außerdem ist vorzugsweise nicht vorgesehen, dass das in die erste Form eingebrachte fließfähige Material an der Sitzheizung entlang (bzw. darum herum) auf die aus Sicht des Einbringens des Materials andere Seite (also typischerweise die spätere obere Seite des WC-Sitzes) gelangt. Durch die gewölbte Vorformung kann dies noch leichter und zuverlässiger vermieden werden.

Die Sitzheizung ist in ihrer beschriebenen gewölbten Formgebung vorzugsweise auf einer Trägerfolie gehalten (die in dieser Hinsicht also quasi als Teil der Sitzheizung betrachtet wird). Z. B. kann es sich um auf einer Kunststofffolie aufgeklebte, aufgedruckte oder sonst wie befestigte Drahtstrukturen oder Leiterbahnen handeln. Die Sitzheizung kann auf der Trägerfolie z. B. auch lithographisch definiert und freigeätzt werden.

Außerdem kann die Sitzheizung an sich eher eine flächige Schichtstruktur als eine Leiterbahn- oder Drahtstruktur aufweisen, etwa weil sie aus einem leitfähigen Polymer, einer leitfähigen Kohlenstoffschicht oder ähnlichem aufgebaut ist. Bevorzugt ist allerdings eine metallische Draht- oder Leiterbahnstruktur auf einer Kunststofffolie, insbesondere einer ABS-Folie.

Vorzugsweise verbleibt die Trägerfolie in der ersten Form und wird damit Teil des Verbundes. Sie kann damit dazu beitragen, dass sich das oben erwähnte fließfähige Material auf einer Seite der Sitzheizung flächig anlegt, aber z. B. nicht auf die andere Seite durchdringt. Außerdem erleichtert die Trägerfolie den Umgang mit der Sitzheizung vor und bei dem Einlegen in die Form.

Gemäß einer weiteren Ausgestaltung ist ein elektrischer Heizleiter der Sitzheizung in Bezug auf die endgültige Montageposition des WC-Sitzes auf einer unteren Seite der Trägerfolie vorgesehen. "Unten" bezieht sich hier also nicht auf Situationen während der Herstellung, sondern auf die Situation bei auf dem WC-Körper montiertem WC-Sitz (im heruntergeklappten Zustand). Damit kann die Trägerfolie z. B. zur elektrischen Isolierung verwendet werden. Bspw. könnte die Trägerfolie die endgültige Sitzoberfläche bilden oder nachträglich nur noch mit einer für die elektrische Isolierung unzureichenden Schicht bedeckt werden.

Stattdessen oder außerdem kann die Trägerfolie verhindern, dass sich Strukturen des Heizleiters auf der endgültigen Sitzoberfläche abzeichnen, bspw. weil sie sich bei einem nachträglichen Beschichtungsverfahren nicht hinreichend egalisieren oder einbetten lassen. Während des oben beschriebenen Herstellvorgangs kann aber das in die erste Form eingebrachte fließfähige Material um Strukturen des elektrischen Heizleiters mit einer gewissen Dicke herumfließen und insoweit diese Strukturen in sich aufnehmen.

Vorzugsweise wird die Sitzheizung, wenn es sich um auf einer Trägerfolie gehaltene elektrische Heizleiter handelt, erst in diesem Zustand mit Heizleitern in die gewölbte Formgebung vorgeformt. Die Herstellung der elektrischen Heizleiter durch Aufkleben, Aufdrucken oder anderes Befestigen oder auch durch die lithographische Definition und Ätzung oder in anderer Weise ist typischerweise bei einer flächigen planaren Formgebung einfacher. Außerdem können in dieser Weise Sitzheizungsrohlinge für unterschiedliche WC-Sitzformen und damit unterschiedliche gewölbte Formgebungen einheitlich hergestellt werden. Grundsätzlich sind allerdings auch Verbindungen zwischen elektrischen Heizleitern und bereits vorgeformten Trägerfolien denkbar, wenngleich vielleicht etwas aufwendiger.

Z. B. können Teile der Sitzheizung bzw. der Trägerfolie durch Klemmen zwischen zwei Teilen der ersten Form fixiert werden, etwa durch Kontaktstellen an der Sitzheizung berührende Stifte, die dann an diesen Stellen auch für eine spätere Zugänglichkeit der Kontaktstellen sorgen. Zusätzlich oder alternativ könnten die Sitzheizung bzw. die Trägerfolie auch durch eine Vakuumeinrichtung vorfixiert werden, wobei diese vorzugsweise auf der Seite liegt, der die Sitzheizung näher ist und die im fertigen Sitz oben liegt. Diese Seite wird bei einer bevorzugten Ausgestaltung (vgl. weiter unten) später noch beschichtet, so dass etwaige Spuren von Vakuumkanälen nicht wesentlich sein müssen.

Eine Position nahe der oberen Oberfläche verbessert die energetische Effizienz der Sitzheizung im Hinblick auf die gewünschte Oberflächentemperatur und den Energieeinsatz und verbessert außerdem das Ansprechverhalten nach dem Einschalten.

Das in die erste Form eingebrachte fließfähige Material drückt die Sitzheizung vorteilhafterweise an die gewünschte Außenfläche der ersten Form unter Druck an und sorgt damit für eine besonders gute Definition der Position. Wegen des Drucks ist diese Positionierung noch sicherer und genauer, als das einfache Einlegen einer vorgeformten Sitzheizung mit optionaler zusätzlicher Fixierung durch Ansaugen oder dergleichen. Dabei muss nicht unbedingt eine wesentliche Distanz überbrückt werden, es kann schon vorteilhaft sein, wenn sich die Sitzheizung z. B. mit der Trägerfolie an einer gewünschten Außenfläche der ersten Form unter Druck und damit definiert anliegt, was durch einfaches Einlegen in die Form (ggf. bei Positionierung in den beiden übrigen Raumrichtungen) nicht ohne weiteres zuverlässig gewährleistet werden kann.

Das bislang in allgemeinen Begriffen beschriebene Füllen der ersten Form mit fließfähigem Material und Verfestigen des Materials kann unterschiedlichen Technologien entsprechen, insbesondere dem bereits erwähnten Spritzgießen, das vorliegend auch bevorzugt ist und sich auf das Einbringen von thermoplastischem und durch Erwärmung verflüssigtem Material bezieht. Allerdings sind auch Verfahren mit duroplastischen Werkstoffen denkbar, die man als Pressen oder auch als Gießen bezeichnen könnte.

Das Spritzgießen mit thermoplastischen Materialien ermöglicht gegenüber z. B. druckplastischen Materialien die präzisere Herstellung filigraner Formen und schnellere Herstellungsprozesse. Insbesondere ist keine oder weniger Nacharbeit (z. B. an Trenngraten) erforderlich, wobei solche Nacharbeit nicht nur wegen des Arbeitsaufwandes sondern auch wegen der unvermeidlichen Oberflächenschädigung nachteilig ist. Allerdings bedingt das Spritzgießen vergleichsweise teure Werkzeuge und Maschinen.

Das bevorzugte thermoplastische Material ist ASA. Dieses weist insbesondere eine erhebliche chemische Ähnlichkeit zu dem bereits erwähnten bevorzugten Trägerfolienwerkstoff ABS auf, sodass sich zwischen den beiden Materialien eine sehr gute Haftung und ein stabiler Verbund ergibt. Wenn die Sitzheizung selbst (sei sie nun leiterbahn- oder drahtförmig oder flächig) diesen Kontakt nicht behindert, entweder indem sie durchlässig ist oder auf der anderen Seite angeordnet, kann es in diesem Zusammenhang dann auf die Haftung zwischen dem Material des Heizleiters selbst (oder einer Induktionsschicht) und dem fließfähig eingebrachten Material nicht oder weniger ankommen.

Das in der obigen Weise eingebrachte thermoplastische Material hat im fertigen Zustand des Sitzes eine bevorzugte typische Dicke zwischen 1 und 12 mm, wobei als Untergrenzen 2 mm und 3 mm sowie als Obergrenzen 10 mm und 8 mm weiter bevorzugt sind. Diese bevorzugte Materialstärke kann punktuell unter- oder auch überschritten werden und gilt insoweit für mindestens 50%, vorzugsweise mindestens 60%, 70% oder sogar 80% der Fläche des fertigen WC-Sitzes.

Wenn die Trägerfolie in Bezug auf den fertigen WC-Sitz außerhalb der Sitzheizung liegt, kann sie in einer besonders einfachen Ausgestaltung die fertige Oberfläche des WC-Sitzes bilden. Vorzugsweise wird sie allerdings nachträglich noch beschichtet, und zwar vorzugsweise durch Aufbringen eines weiteren fließfähigen Materials in einer "zweiten" Form. Hier ist von der zweiten Form in begrifflicher Abgrenzung zu der bisher erwähnten (daher als erste Form bezeichneten) Form die Rede. Diese zweite Form grenzt vorzugsweise in Bezug auf das in die erste Form eingebrachte Material an der anderen Seite an die Sitzheizung oder Trägerfolie an, wobei dies nicht gleichzeitig mit dem Prozess in der ersten Form der Fall sein muss und insbesondere die zweite Form überhaupt erst nach der Verfestigung des in die erste Form eingebrachten Materials gebildet werden kann.

(Auch) die zweite Form ist vorzugsweise geschlossen, wobei im Prinzip aber auch eine offene Form zum Beispiel zum Aufgießen des fließfähigen Materials benutzt werden kann. Auch kann die zweite Form einen zweiten Spritzgussschritt bedeuten. Bevorzugt wird allerdings hier kein thermoplastisches Material benutzt sondern die Sitzheizung in der zweiten Form mit einem sich aufgrund chemischer Prozesse verfestigenden Material überflutet.

Das Überfluten hat gegenüber der Verwendung einer Trägerfolie als Sitzoberfläche oder auch dem Spritzgießen verschiedene mögliche Vorteile. Z. B. können für das Überfluten bestimmte für eine Folie weniger geeignete Materialien eingesetzt werden, die aber als WC-Sitzoberfläche besonders vorteilhaft sind. Erfindungsgemäß ist zum einen Polyurea bevorzugt, und zwar wegen seiner Langzeitbeständigkeit und Unempfindlichkeit gegen Verfärbungen (etwa durch Textilfarben, Verschmutzungen etc.). Andererseits kann aber auch Polyurethan eine günstige Wahl sein, die ebenfalls bevorzugt ist. Grundsätzlich können beim Überfluten im Vergleich zu der Trägerfolie als Oberfläche deutlich bessere Übergänge des Überflutungsmaterials zu dem anderen Material (insbesondere Spritzgussmaterial) hergestellt werden und Schwierigkeiten durch einen Folienrand vermieden werden. Die genannten Werkstoffe sind ein Zweikomponentenwerkstoffe (ggf. zuzüglich Farbstoff), die in der zweiten Form aushärten können.

Die Materialstärke des Überflutungsmaterials (also senkrecht zur Oberfläche) liegt vorzugsweise nicht über 2 mm, besonders bevorzugterweise nicht über 1,8 mm, 1,6 mm, 1,4 mm, 1,2 mm oder sogar nicht über 1mm. Andererseits sind folgende Untergrenzen für die Materialstärke bevorzugt: 0,2 mm, 0,3 mm, 0,4 mm und schließlich 0,5 mm.

Für das Zuführen in die zweite Form kann das fließfähige Material durch einen Einströmkanal geführt werden, der in Bezug auf den fertigen WC-Sitz im heruntergeklappten montierten Zustand und in Bezug auf einen Querschnitt (quer zur Verlaufsrichtung des Sitzes an dieser Stelle, also mit minimalem Querschnitt) durch den Sitzring seitlich liegt, vorzugsweise an einem Ende, etwa dem unteren Rand, des überfluteten Bereichs. Insbesondere liegt eine solche Stelle vorzugsweise außerdem eher vorne oder hinten, also in Bezug auf die typische mittlere Symmetrieebene des WC-Sitzes in dieser Ebene. Vom Ausführungsbeispiel gilt das für eine Stelle am hintersten Ende des Sitzes. An dieser Stelle sind etwaige Spuren besonders wenig auffällig. Ähnliches gilt für die beim Überfluten vorteilhaften Überlaufkanäle, vgl. das Ausführungsbeispiel.

Der Zuströmkanal für die erste Form kann an einer Unterseite (wieder in Bezug auf die montierte heruntergeklappte Position des WC-Sitzes) realisiert werden. Diese Position ist wenig auffällig.

Im Prinzip können die erste Form und die zweite Form grundverschieden sein, wobei dann der der erste Form entnommene Verbund in die zweite Form eingelegt werden muss. Vorzugsweise teilen jedoch die beiden Formen einen Formteil, und zwar insbesondere den diejenigen, der an das in der ersten Form eingefüllte Material angrenzt. Dann wird sozusagen auf der anderen Seite ein Formteil bewegt oder ausgetauscht und damit insbesondere ein zuvor nicht vorhandener Hohlraum für das Überfluten geschaffen.

Erfindungsgemäß kann der in der beschriebenen Weise hergestellte WC-Sitz mit einem WC-Deckel verbunden werden. Der WC-Deckel kann z. B. ebenfalls durch Spritzguss hergestellt werden. Typischerweise werden beide Teile gelenkig verbunden, wobei Drehdämpfer eingesetzt werden können. Damit wird eine WC-Sitzgarnitur hergestellt.

Außerdem kann mit dem erfindungsgemäßen WC-Sitz auch ein WC hergestellt werden, entweder indem der WC-Sitz für sich an einem WC-Körper montiert wird (an welchem ggf. unabhängig von dem WC-Sitz auch ein WC-Deckel montiert sein kann) oder indem die gerade erwähnte WC-Sitzgarnitur an dem WC-Körper angebracht wird.

Die Steuerung und/oder Versorgung der Sitzheizung kann natürlich aus dem WC-Körper oder aus einem Gehäuseaufbau darauf erfolgen, wobei Leitungsverbindungen (im klassischen Sinn der galvanischen Kontakte) genauso denkbar sind wie "schnurlose" Techniken, etwa durch Induktion. Steuerungselemente können auch teils in dem WC-Sitz und teils in der beschriebenen Weise untergebracht sein. Außerdem kann der WC-Sitz natürlich auch eine Batterie, insbesondere wiederaufladbar, einen Kondensator oder Ähnliches zur Speicherung elektrischer Energie aufweisen.

Im Folgenden wird die Erfindung anhand eines Ausführungsbeispiels näher erläutert, wobei die einzelnen Merkmale im Rahmen der Ansprüche auch in anderer Kombination erfindungswesentlich sein können und auch weiterhin nicht im Einzelnen zwischen den unterschiedlichen Anspruchskategorien unterschieden wird.

Die Figuren 1-10 zeigen in einer schematisierten Schnittdarstellung die erfindungsgemäße Herstellung eines WC-Sitzes, und zwar in chronologischer Folge;
Figur 11 zeigt eine Draufsicht auf einen fertigen WC-Sitz als Ergebnis eines solchen Herstellungsverfahrens.

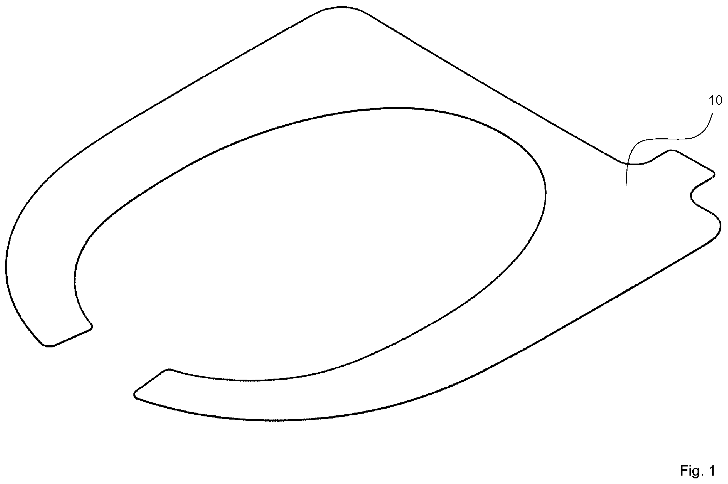

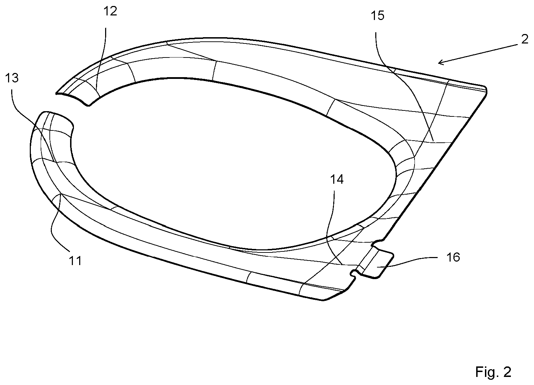

In Figur 1 ist eine flächige planare ABS-Trägerfolie 10 mit darauf aufgebrachten (nicht gezeichneten) Kupferdrähten als elektrische Heizleiter und einer Dicke von etwa 0,5 mm dargestellt. Die Trägerfolie 10 ist aus Bahnmaterial ausgestanzt und in dem Zustand in Figur 1 abgesehen von der Struktur der aufgeklebten Heizleiter ohne Struktur in der Höhendimension. Hiervon ausgehend kann die Trägerfolie 10 zusammen mit den Heizleitern durch Erwärmen und z. B. Vakuumansaugen auf einer entsprechend geformten Ansaugeinrichtung in eine gewölbte Form gebracht werden, die Figur 2 zeigt. Damit ist eine gewölbte Sitzheizung 2 hergestellt, deren dreidimensionale Form weitgehend der endgültigen Form im später fertigen WC-Sitz angepasst ist.

Die perspektivische Darstellung der Figur 2 enthält zur Verdeutlichung der dreidimensionalen Form Linien, deren Erscheinungsbild in der perspektivischen Darstellung die Wölbung und insbesondere den Wölbungssinn der Form der Sitzheizung 2 veranschaulicht. Beispielsweise zeigt der lokale Linienverlauf beim Bezugszeichen 11 eine von oben betrachtet konvexe Form am äußeren Rand. Gleiches gilt für den lokalen Linienverlauf am inneren Rand beim Bezugszeichen 12. Umgekehrt sieht man in eher mittigen Bereichen beispielsweise bei den Bezugszeichen 13, 14 und 15 von oben betrachtet konkave Formen, wobei die Konkavität vergleichsweise schwächer ausgeprägt ist als die Konvexität. Insoweit hat also die Sitzheizung 2 einen doppelten Wölbungssinn und ist in einigen Bereichen (sozusagen radial von außen nach innen gehend) zunächst konvex, dann konkav und dann wieder konvex gewölbt, also in diesem Sinn mit einem dreifachen Wölbungssinn versehen. **In** anderen Bereichen, insbesondere in Figur 2 rechts, ist sie zunächst von innen nach außen konvex und dann konkav, also doppelt gewölbt.

Die Lasche von rechts mit dem Bezugszeichen 16 bildet eine Kontaktiermöglichkeit für den Anschluss der Stromversorgung und ist in den weiteren Figuren wegen Einbettung nicht mehr zu sehen.

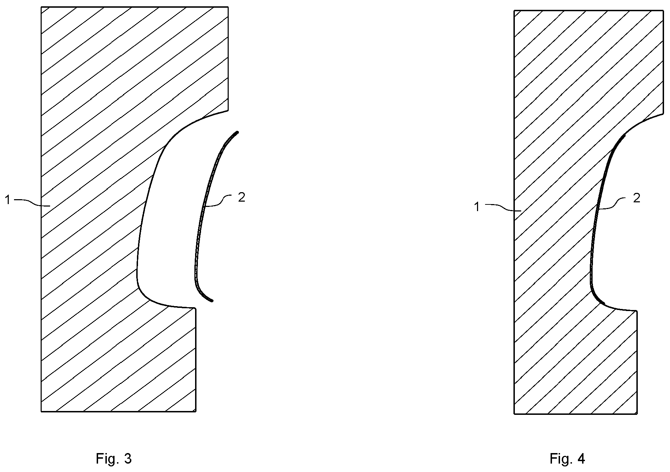

In Figur 3 und 4 ist jeweils mit 1 ein Formteil einer Spritzgussmaschine dargestellt, wobei in das Formteil 1 und konkret eine darin ausgebildete Hohlform die Sitzheizung 2 eingelegt wird bzw. worden ist. Dieses Einlegen kann manuell, aber auch maschinell, etwa mit einer Vakuumeinrichtung an einem Roboterarm, erfolgen.

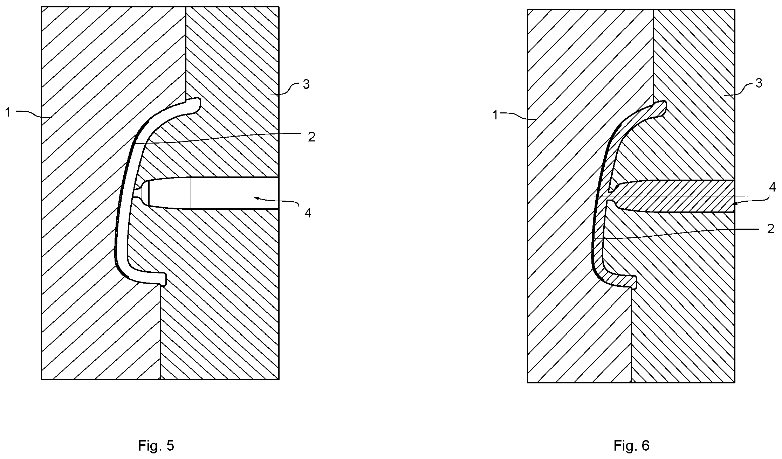

Die Sitzheizung 2 ragt in einer in der schematischen Darstellung nicht erkennbaren Weise unten etwas über die Hohlform hinaus, um dort im nächsten, in Figur 5 dargestellten Schritt eingeklemmt zu werden. In Figur 5 erkennt man nämlich, dass ein zweiter Formteil 3 von rechts auf den in Figur 3 und 4 bereits sichtbaren Formteil 1 aufgesetzt worden ist und damit eine erste Spritzgussform 1, 3 definiert worden ist. Der zweite Formteil 3 enthält einen in Figur 45 erkennbaren Zuströmkanal für das erwärmte thermoplastische Material, nämlich ASA, zum Hinterspritzen der Sitzheizung 2. Durch das Zusammenfügen der beiden Formteile 1 und 3 wird die bereits in ihrem unteren Rand leicht vorfixierte Sitzheizung 2 in nicht dargestellter Weise zwischen den beiden Formteilen 1 und 3 eingeklemmt. Dabei passt die Sitzheizung 2 durch ihre gewölbte Formgestaltung sehr gut zu der Innenwand des Formteils 1 und wird insoweit bereits hierdurch lagedefiniert.

Alternativ könnte die Sitzheizung 2 zum Beispiel in diesem unteren Bereich oder auch sonst auf ihrer linken Seite in den Figuren 3 und 4 durch eine Vakuumeinrichtung vorfixiert werden. Auslässe von Vakuumkanälen stören, wenn sie nicht zu groß sind, den Spritzgussvorgang wegen der Trägerfolie der Sitzheizung 2 nicht.

Durch das Einbringen des fließfähigen ASA in die erste Spritzgussform 1, 3, das in Figur 5 schon im Ansatz dargestellt ist, legt sich das erwärmte ASA von rechts an die in der ersten Form links angeordnete Sitzheizung 2 an und presst diese Sitzheizung 2 zunehmend gegen die linke Außenwand der ersten Form 1, 3, wobei das Spritzgussmaterial und die bewirkte flächige Anpressung der Sitzheizung 2 an die erste Außenwand der Form etwaige Positionsungenauigkeiten vor allem senkrecht zur Flächigkeit der Sitzheizung 2 ausgleichen und damit die Positionierung perfektionieren. Außerdem legt sich das erwärmte fließfähige ASA um die Kupferleiter auf der ABS-Trägerfolie der Sitzheizung 2 herum und bettet diese zusammen mit der Trägerfolie ein. Schließlich bedeckt das Spritzgussmaterial die gesamte rechte Seite der Sitzheizung 2, wobei der oberste Bereich der in dem dargestellten Schnitt ungefähr U-förmigen ersten Form von der Sitzheizung 2 nicht erfasst wird.

In Figur 6 ist der Zustand der noch geschlossenen ersten Form 1, 3 bei vollständiger Füllung dargestellt.

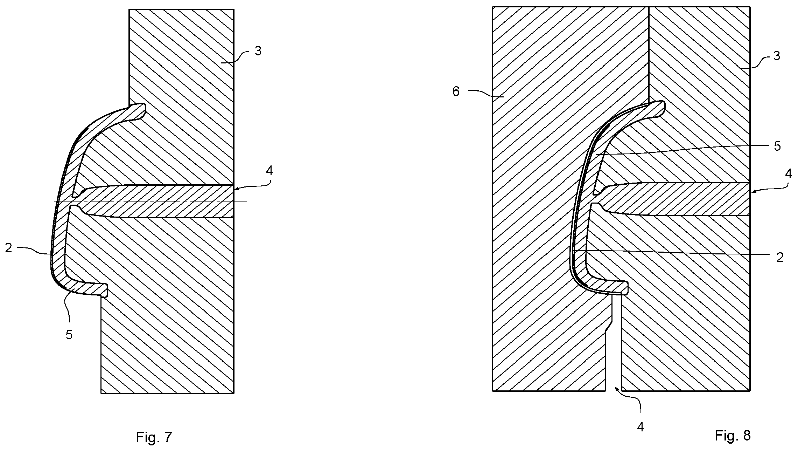

Figur 7 zeigt den Zustand nach dem Öffnen der ersten Form durch Wegbewegen des Formteils 1 von dem Formteil 3. In diesem Zustand bleiben die Sitzheizung 2 und die nach dem Erstarren des ASA hergestellte untere Schale 5 des zukünftigen WC-Sitzes an ihrer Stelle am Formteil 3. Im Folgenden wird von links gemäß Figur 8 ein dritter Formteil 6 heranbewegt, welcher zusammen mit der Sitzheizung 2 bzw., wo sie nicht mehr existiert, der unteren Schale 5 einen Hohlraum für ein Überfluten bildet. Im Folgenden wird die Kombination der beiden Formteile 3 und 6 als zweite Form bezeichnet, wobei die zuvor geformte untere Schale 5 mit der Sitzheizung 2 darauf den tatsächlichen Hohlraum für das Überfluten verkleinert und begrenzt. Dabei wird durch einen im unteren Teil der Figur 8 symbolisch dargestellten Einlaufkanal 7 Polyurea (oder auch Polyurethan) in fließfähigen Zustand eingebracht, bis die zweite Form 3, 6 vollständig gefüllt ist und das Polyurea-Material durch nicht dargestellte Überlaufkanäle im oberen Bereich austritt.

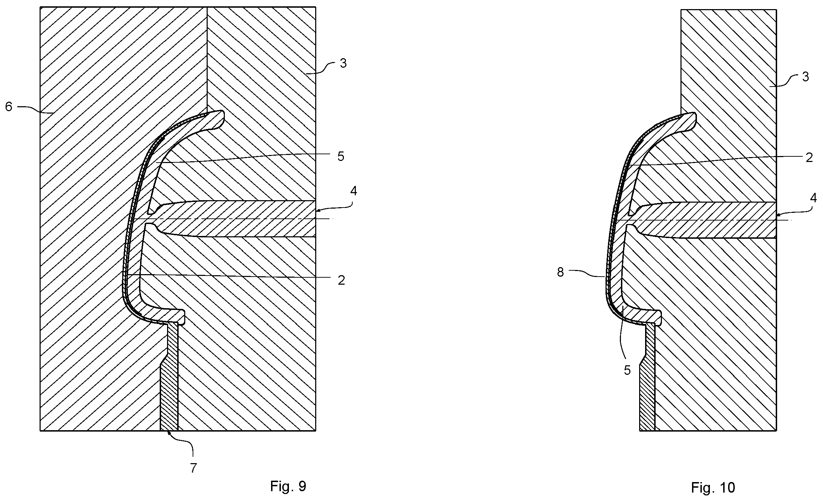

In Figur 9 ist die zweite Form 3, 6 dementsprechend gefüllt und in Figur 8 noch nicht. Man erkennt im Vergleich auch, dass die zu füllende Kavität vergleichsweise sehr klein ist, weil sie nur eine geringe Materialstärke im Bereich zwischen 0,5 bis 1mm bilden soll.

Nach dem Erstarren des Polyurea-Materials durch eine chemische Reaktion darin (also nach dem chemischen Aushärten) kann die zweite Form 3, 6 geöffnet werden, vgl. Figur 10, und die nunmehr hergestellte Kombination im Sinn eines Schichtverbunds aus der unteren Schale 5, der Sitzheizung 2 (also Kupfer-Widerstandsheizung auf Trägerfolie) und darauf bzw. links daneben der Polyurea -Überflutungsschicht 8, entfernt werden.

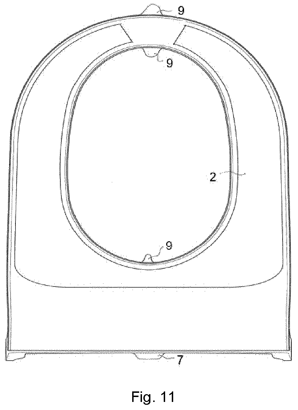

Das fertige Erzeugnis zeigt Figur 11 in einer realistischeren Draufsicht, wobei der Einlaufkanal mit dem schon verwendeten Bezugszeichen 7 bezeichnet ist, hier aber in Bezug auf die Position eines WC-Benutzers eine Lage ganz hinten und rückseitig am WC-Sitz hat. 9 bezeichnet drei Überlaufkanäle, die in der Benutzungslage des WC-Sitzes unten an einer Kante liegen. 2 bezeichnet die Sitzheizung. Es versteht sich von selbst, dass das in den Figuren 3-9-10 dargestellte U-förmige Querschnittsprofil einem Schnitt durch den WC-Sitz mit auf Figur 11 senkrechter Schnittebene entspricht und die Lage des Einlaufkanals 7 in den Figuren 3-10 symbolisch dargestellt wurde.

Das für die eigentliche Benutzungsoberfläche verwendet Polyurea-Material (oder auch Polyurethan) hat hervorragende Eigenschaften hinsichtlich der optischen Erscheinung, der Dauerhaftigkeit, der Farbechtheit und der Unempfindlichkeit gegen Licht und Reinigungsmittel, Hautkontakt und kosmetische Chemikalien. Gleichzeitig hat die Unterschale 5 aus spritzgegossenem ASA eine sehr gute Formtreue und erfordert insbesondere keinen oder nur einen marginalen Nachbearbeitungsaufwand. Dabei ist die Sitzheizung 2 äußerst oberflächennah im obersten Bereich des WC-Sitzes untergebracht und eignet sich damit für eine energieeffiziente und reaktionsschnelle und präzise steuer- bzw. regelbare Betriebsweise. Die Energieeffizienz kann zum Beispiel auch beim Einsatz einer schnurlosen Energieübertragung zur Sitzheizung von besonderem Vorteil sein. Außerdem lassen sich relativ kleine Spannungen verwenden, was der Sicherheit zugutekommt bzw. Aufwand für Sicherheitsmaßnahmen verringert oder vermeidet.

Selbstverständlich können weitere Teile, insbesondere elektrische oder elektronische Bauteile, während der Herstellung integriert werden, insbesondere in der unteren Schale 5, und kann die U-förmige Querschnittsform genauso wie die Form in der Draufsicht der Figur 11 variiert werden.

Das Ausführungsbeispiel zeigt eine vorteilhafte Kombination zweier Herstellungsverfahren. Dabei ist das in der ersten Form durchgeführte Spritzgießen relativ schnell und bei größeren Stückzahlen auch ökonomisch. Andererseits erlaubt das Überfluten in der zweiten Form den Einsatz sehr vorteilhafter Materialien, die als Zweitkomponentenmaterialien (zuzüglich gegebenenfalls Farbstoff) dem Spritzgießen nicht zugänglich sind sondern aus sich heraus chemisch aushärten. Zusammen mit dem Spritzgießen ergibt sich dabei eine hervorragende Oberflächenqualität und können Klebe- oder Schweißfugen oder andere Trennkanten (wie etwa bei dem Zusammenfügen separat hergestellter Schalen) vermieden werden. Das Überfluten vermeidet außerdem einen wahrnehmbaren Folienrand am Rand der Sitzheizung.

## Patentansprüche

1. Verfahren zum Herstellen eines WC-Sitzes mit den folgenden Schritten:
- Herstellen einer Sitzheizung (2),
- danach Einbringen der Sitzheizung (2) in eine erste Form (1, 3),
- danach Füllen der ersten Form (1, 3) mit einem fließfähigen Material,
- Verfestigen des Materials zur Herstellung eines Verbundes aus der Sitzheizung (2) und dem verfestigten Material in der ersten Form (1, 3), **dadurch gekennzeichnet, dass** die Sitzheizung (2) in einer flächigen gewölbten Formgebung hergestellt und danach in die erste Form (1, 3) eingebracht wird, wobei die erste Form (1, 3) auf einer ersten Seite der Sitzheizung (2) mit dem fließfähigen Material befüllt wird.

2. Verfahren nach Anspruch 1, bei dem die Sitzheizung (2) auf einer Trägerfolie, vorzugsweise aus ABS, hergestellt und in die erste Form (1, 3) eingebracht wird und vorzugsweise die Trägerfolie danach in der ersten Form (1, 3) und in dem hergestellten Verbund verbleibt.

3. Verfahren nach Anspruch 2, bei dem ein elektrischer Heizleiter der Sitzheizung (2) auf einer unteren Seite der Trägerfolie vorgesehen ist.

4. Verfahren nach Anspruch 2, optional auch nach Anspruch 3, bei dem bei der Herstellung der Sitzheizung (2) zunächst die Sitzheizung (2) in einer flächigen planaren Formgebung hergestellt wird und danach in die gewölbte Formgebung verformt wird, wobei ein elektrischer Heizleiter der Sitzheizung (2) schon vor dem Verformen in der Sitzheizung (2) vorgesehen ist.

5. Verfahren nach einem der vorstehenden Ansprüche, bei dem die Sitzheizung eine Materialstärke von weniger als 3 mm aufweist.

6. Verfahren nach einem der vorstehende Ansprüche, bei dem die gewölbte Formgebung der Sitzheizung (2) vor dem Einbringen in die erste Form (1, 3) einen mindestens doppelten Wölbungssinn aufweist.

7. Verfahren nach einem der vorstehenden Ansprüche, bei dem das Füllen der ersten Form (1, 3) mit dem und das Verfestigen des Materials in der ersten Form (1, 3) einem Spritzgussverfahren entspricht und das Material thermoplastisch, vorzugsweise ASA, ist.

8. Verfahren nach einem der vorstehenden Ansprüche, bei dem die Materialstärke des verfestigten Materials, welches zuvor in die erste Form (1, 3) eingefüllt wurde, zwischen 1 und 12 mm beträgt, und zwar für mindestens 50% Anteil der Fläche des WC-Sitzes.

9. Verfahren nach einem der vorstehenden Ansprüche mit dem zusätzlichen Schritt:
- Überfluten des Verbundes auf einer zweiten Seite der Sitzheizung (2) in einer zweiten Form (3, 6) nach dem Verfestigen des Materials, wobei die zweite Form (3, 6) vorzugsweise geschlossen ist, wobei ein Überflutungsmaterial in einem fließfähigen Zustand verwendet wird und sich dann in der zweiten Form (3, 6) verfestigt.

10. Verfahren nach Anspruch 9, bei dem für das Überflutungsmaterial ein Zuströmkanal (7) zu der zweiten Form (3, 6) und ein Überlaufkanal (9) der zweiten Form verwendet werden, welche Kanäle (7, 9) in Bezug auf einen Querschnitt durch den WC-Sitz seitlich in den Hohlraum der zweiten Form (3, 6) münden, vorzugsweise an einem Ende des überfluteten Bereichs.

11. Verfahren nach Anspruch 9 oder 10, bei dem ein Teil (3) der zweiten Form (3, 6) schon als Teil der ersten Form (1, 3) verwendet wird.

12. Verfahren nach Anspruch 7, optional auch in Verbindung mit einem weiteren der vorstehenden Ansprüche, bei dem für das Zuströmen des thermoplastischen Materials ein Zuströmkanal (4) zu der ersten Form (1, 3) verwendet wird, der an einer unteren Seite in den Hohlraum der ersten Form (1, 3) mündet.

13. Verfahren zum Herstellen einer WC-Sitzgarnitur, bei welchem Verfahren gemäß einem der Ansprüche 1-12 ein WC-Sitz hergestellt wird und mit einem WC-Deckel verbunden wird.

14. Verfahren zum Herstellen eines WCs, bei welchem gemäß einem der Ansprüche 1-12 ein WC-Sitz hergestellt wird und der WC-Sitz mit einem WC-Körper verbunden wird, wobei vorzugsweise zunächst gemäß Anspruch 13 eine WC-Garnitur hergestellt und diese dann mit dem WC-Körper verbunden wird.

## Claims

1. Method for producing a toilet seat, comprising the following steps:
- producing a seat heater (2),
- then introducing the seat heater (2) into a first mold (1, 3),
- then filling the first mold (1, 3) with a flowable material,
- solidifying the material to produce a composite of the seat heater (2) and the solidified material in the first mold (1, 3),
**characterized in that** the seat heater (2) is produced in a planar curved shape and is then introduced into the first mold (1, 3), wherein the first mold (1, 3) is filled with the flowable material on a first side of the seat heater (2).

2. Method according to claim 1, in which the seat heater (2) is produced on a carrier film, preferably of ABS, and is introduced into the first mold (1, 3), and preferably the carrier film then remains in the first mold (1, 3) and in the composite produced.

3. Method according to claim 2, in which an electrical heating conductor of the seat heater (2) is provided on a lower side of the carrier film.

4. Method according to claim 2, optionally also according to claim 3, in which, during the production of the seat heater (2), the seat heater (2) is first produced in a sheet-like planar shape and is then deformed into the curved shape, wherein an electrical heating conductor of the seat heater (2) is already provided in the seat heater (2) before the deformation.

5. Method according to one of the preceding claims, in which the seat heater has a material thickness of less than 3 mm.

6. Method according to one of the preceding claims, in which the curved shape of the seat heater (2) has an at least double direction of curvature before introduction into the first mold (1, 3).

7. Method according to one of the preceding claims, in which the filling of the first mold (1, 3) with the material and the solidification of the material in the first mold (1, 3) corresponds to an injection-molding method and the material is thermoplastic, preferably ASA.

8. Method according to one of the preceding claims, in which the material thickness of the solidified material, which was previously filled into the first mold (1, 3), is between 1 and 12 mm, specifically for at least 50% of the area of the toilet seat.

9. Method according to one of the preceding claims, comprising the additional step:
- flooding the composite on a second side of the seat heater (2) in a second mold (3, 6) after the solidification of the material, wherein the second mold (3, 6) is preferably closed, wherein a flooding material is used in a flowable state and then solidifies in the second mold (3, 6).

10. Method according to claim 9, in which an inflow channel (7) to the second mold (3, 6) and an overflow channel (9) of the second mold are used for the flooding material, which channels (7, 9) merge laterally into the cavity of the second mold (3, 6) with respect to a cross section through the toilet seat, preferably at one end of the flooded region.

11. Method according to claim 9 or 10, in which a part (3) of the second mold (3, 6) is already used as part of the first mold (1, 3).

12. Method according to claim 7, optionally also in conjunction with a further one of the preceding claims, in which an inflow channel (4) to the first mold (1, 3) is used for the inflow of the thermoplastic material, which inflow channel merges into the cavity of the first mold (1, 3) on a lower side.

13. Method for producing a toilet seat set, in which method a toilet seat is produced according to one of claims 1-12 and is connected to a toilet cover.

14. Method for producing a toilet, in which a toilet seat is produced according to one of claims 1-12 and the toilet seat is connected to a toilet body, wherein preferably a toilet set is first produced according to claim 13 and is then connected to the toilet body.

## Revendications

1. Procédé de fabrication d'un siège de WC, comprenant les étapes suivantes :
- fabrication d'un chauffage de siège (2),
- ensuite introduction du chauffage de siège (2) dans un premier moule (1, 3),
- ensuite remplissage du premier moule (1, 3) avec un matériau fluide,
- solidification du matériau pour la fabrication d'un composite du chauffage de siège (2) et du matériau solidifié dans le premier moule (1, 3), **caractérisé en ce que** le chauffage de siège (2) est fabriqué dans une forme bombée plane et est ensuite introduit dans le premier moule (1, 3), le premier moule (1, 3) étant rempli du matériau fluide sur un premier côté du chauffage de siège (2).

2. Procédé selon la revendication 1, dans lequel le chauffage de siège (2) est fabriqué sur une feuille de support, de préférence en ABS, et est introduit dans le premier moule (1, 3) et de préférence la feuille de support reste ensuite dans le premier moule (1, 3) et dans le composite fabriqué.

3. Procédé selon la revendication 2, dans lequel un conducteur chauffant électrique du chauffage de siège (2) est prévu sur un côté inférieur de la feuille de support.

4. Procédé selon la revendication 2, en option également selon la revendication 3, dans lequel, lors de la fabrication du chauffage de siège (2), le chauffage de siège (2) est d'abord fabriqué dans une forme plane plane et est ensuite déformé dans la forme bombée, un conducteur chauffant électrique du chauffage de siège (2) étant déjà prévu avant la déformation dans le chauffage de siège (2).

5. Procédé selon l'une quelconque des revendications précédentes, dans lequel le chauffage de siège présente une épaisseur de matériau inférieure à 3 mm.

6. Procédé selon l'une quelconque des revendications précédentes, dans lequel la forme bombée du chauffage de siège (2) présente un sens de bombement au moins double avant l'introduction dans le premier moule (1, 3).

7. Procédé selon l'une quelconque des revendications précédentes, dans lequel le remplissage du premier moule (1, 3) avec le matériau et la solidification du matériau dans le premier moule (1, 3) correspondent à un procédé de moulage par injection et le matériau est thermoplastique, de préférence ASA.

8. Procédé selon l'une quelconque des revendications précédentes, dans lequel l'épaisseur de matériau du matériau solidifié, qui a été rempli auparavant dans le premier moule (1, 3), est comprise entre 1 et 12 mm, et ce pour au moins 50 % de la surface du siège de WC.

9. Procédé selon l'une quelconque des revendications précédentes, comprenant l'étape supplémentaire suivante :
- inondation du composite sur un deuxième côté du chauffage de siège (2) dans un deuxième moule (3, 6) après la solidification du matériau, le deuxième moule (3, 6) étant de préférence fermé, un matériau d'inondation étant utilisé dans un état fluide et se solidifiant ensuite dans le deuxième moule (3, 6).

10. Procédé selon la revendication 9, dans lequel un canal d'afflux (7) vers le deuxième moule (3, 6) et un canal de trop-plein (9) du deuxième moule sont utilisés pour le matériau d'inondation, lesquels canaux (7, 9) débouchent latéralement par rapport à une section transversale à travers le siège de WC dans la cavité du deuxième moule (3, 6), de préférence à une extrémité de la zone inondée.

11. Procédé selon la revendication 9 ou 10, dans lequel une partie (3) du deuxième moule (3, 6) est déjà utilisée en tant que partie du premier moule (1, 3).

12. Procédé selon la revendication 7, en option également en liaison avec une autre des revendications précédentes, dans lequel un canal d'afflux (4) vers le premier moule (1, 3) est utilisé pour l'afflux du matériau thermoplastique, lequel canal d'afflux débouche sur un côté inférieur dans la cavité du premier moule (1, 3).

13. Procédé de fabrication d'un ensemble de siège de WC, dans lequel procédé selon l'une quelconque des revendications 1 à 12, un siège de WC est fabriqué et est relié à un couvercle de WC.

14. Procédé de fabrication d'un WC, dans lequel selon l'une quelconque des revendications 1 à 12, un siège de WC est fabriqué et le siège de WC est relié à un corps de WC, un ensemble de WC étant de préférence d'abord fabriqué selon la revendication 13 et celui-ci étant ensuite relié au corps de WC.
